Europäisches Patentamt

European Patent Office

Office européen des brevets

(11) Publication number: **0 559 993 A1**

# EUROPEAN PATENT APPLICATION

(21) Application number: **92830106.8**

(22) Date of filing: **09.03.92**

(51) Int. Cl.5: **F17D  5/06, G01M 3/28**

(43) Date of publication of application:
**15.09.93 Bulletin  93/37**

(84) Designated Contracting States:
**AT CH DE ES FR GB IT LI SE**

(71) Applicant: **ENTE NAZIONALE PER L'ENERGIA ELETTRICA - (ENEL)**
**Via G.B. Martini 3**
**I-00198 Roma(IT)**

(72) Inventor: **Fanelli, Michele c/o ENEL CRIS**
**Via Ornato 90/14**
**I-20162 Milano(IT)**

(74) Representative: **Ferraiolo, Ruggero et al**
**Via Napo Torriani, 10**
**I-20124 Milano (IT)**

(54) **A system for the detection of a sudden rupture in a pipe through which a liquid is flowing under pressure.**

(57) Pressure transducers (TP) are installed at freely positioned points of a pipe under pressure (2) and an electronic processor(E) is associated with the said transducers (TP) and is provided with software comprising a digital model of the transitory state of the said pipe (2) and has the ability to elaborate in line the signals transmitted by each of the said transducers (TP) according to the integrated water hammering equation ,to carry out a continuous comparison between the foreseeable values of the pressure of the flow (Pm) and the real pressure values (Pr) provided by the transducers (TP) and producing an alarm signal in the case that the said comparison indicates the event of a sudden loss of liquid (Q).

Fig. 1

The present invention concerns a system for the detection of a sudden rupture in a pipe through which a liquid is flowing under pressure, in particular for the detection of a sudden rupture caused by embrittlement due to pipe ageing, bursting, rupture due to the displacement of an anchorage block and such like in a pipe which conveys a liquid under pressure such as pipes in hydroelectric or irrigation plants.

There are noted systems which detect a sudden rupture in a pressurised pipe by means of the measurement of the rate of flow at the two ends of the pipe; if the simultaneous values of these two rates of flow show a consistent difference for a period of time greater than the "rhythm" ( the time taken by a water hammering wave to travel and return along the entire length of the pipe) then this indicates a loss of liquid at an intermediate point.

There are also noted systems to detect the location and the instant of a sudden loss of liquid by means of the processing of only pressure measurements provided by pressure transducers associated with suitable detection and processing apparatus, as disclosed in the Italian Patent No. 888.688 the proprietor of which is the same applicant.

The pressure transducers must be placed along the pipe at points chosen in such a way that the run time of a water hammering wave between two sections corresponding to two consecutive transducers is constant along the whole length of the pipe.

The drawbacks of the noted techniques are numerous. For the first device mentioned, the complaints are that the sensitivity is rather low, about 7% of the maximum flow rate of the pipe; that it is necessary to perform an integration of the detected data for a period of time at least equal to the "rhythm" of the pipe, and hence, even several seconds; that it is impossible to localise the section of the pipe in which the rupture has occurred. For the second device mentioned, the complaints are that there are practical difficulties of installation due to the necessity of installing the pressure transducers at points of the pipe determined by the above mentioned condition that the run time of the water hammering wave is to be constant, points which cannot be predetermined with satisfactory precision.

The systems which employ pressure transducers distributed along a pipe are in fact influenced by a problem stemming from the impossibility of knowing a priori and with satisfactory precision if the transit time of the water hammering wave between two contiguous transducers is equal for every possible pair of transducers, proceeding along the whole pipe. Furthermore, as a consequence of the extremely short duration of the signal that indicates the pipe rupture there is the problem of configuring the signalling and signal processing apparatus in order to have extremely high dependability and resolution.

The invention, as claimed, solves the problems outlined above. The invented system comprises pressure transducers to be installed at freely spaced points of a pipe, that is without particular constraints and not predetermined on the basis of rigid conditions concerning the transit time of an elastic wave in the liquid in the pipe, and comprises an electronic processor associated with all the above mentioned pressure transducers and a signalling and alarm system, and provided with software comprising a digital model of the transitory state of the pipe and the capacity to process the signals transmitted by every transducer in line, according to the integrated water hammering equations (known also as Allievi's equations). In this way, with the pressure detected at an initial point I and at a final point T of the pipe by the end point transducers, the processor carries out a continuous forecast of the pressure $P_m$ at steady flow and at every one of the said points and simultaneously measures the real pressure $P_r$ at the same points. $\tau$ defines the difference between the forecast pressure at standard flow and at every point and the pressure actually measured at the same points which falls within acceptable tolerance owing to the instruments' precision and break-away of the actual phenomena from the forecast behaviour, one will have:

If $[P_m - P_r] < \tau$; there are no anomalies in the pipe and one can carry out appropriate corrections to the rate of flow, calculated by a mathematical model;

If $[P_m - P_r] > \tau$ ; there is the indication of a loss of liquid from the pipe, the point of rupture, the instant at which the rupture occurred, the quantity of liquid which has escaped, and the activation of a signalling and alarm apparatus.

The principle advantages of the invention are in the greater sensitivity to the rate of flow of the leak, in the independence from the differences in transit times between pairs of consecutive transducers, in the lack of sensitivity, in the absence of sudden ruptures, to the normal events of wave hammering, in the possibility of localising, for long pipes, the point and the instant at which the rupture occurred. Another notable advantage is given by the possibility of a timely detection of any undesired variations of the dynamic response of a pipe, in particular any hydraulic resonance phenomena, at least in those cases where the spacio-temporal distribution of the pressure transducers along the pipe is sufficiently dense.

Yet another notable advantage is in the continuous monitoring of the mechanical events which the material of the pipe is subjected, and so in the signalling of any accumulation of phenomena of fatigue and of any other matters of interest in order to estimate the residual life of the pipe.

One way of realising the invention is illustrated as follows with reference to the attached diagram in which

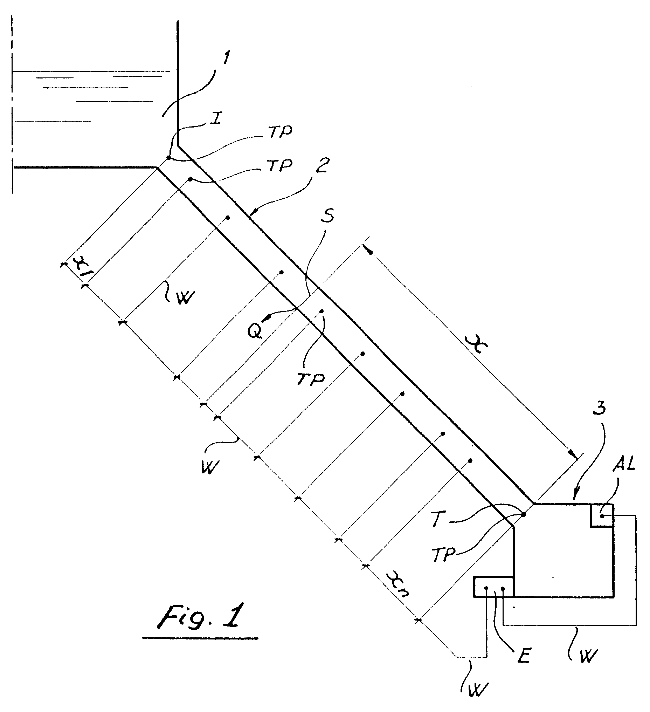

FIG.1 is the diagram of an invented system applied to a hydroelectric plant.

FIG.1 shows a hydraulic reservoir 1, a pressurised pipe 2, a hydroelectric power plant 3, numerous pressure transducers **TP** installed at distances **x1**, **x2**, ..., **xn** along the pressurised pipe without particular constraints, between an initial point **I** and a final point **T**; an electronic processor **E** is associated by means of a conductor **W** to the said numerous pressure transducers and to a signalling and alarm apparatus **AL**. The electronic processor **E** is provided with the above defined software and, therefore, is capable of comparing at any moment and at every pressure transducer TP the pressure which should exist in the pipe in standard conditions with the true pressures; the true pressures could be those generated by any disturbances of the standard state. The processor carries out the comparison continuously solving Allievi's Equations:

$$H = H_o + F (t - x/V) - f(t + x/V);$$
$$u = u_o - g/V [F(t - x/V) + f(t + x/V)]$$

where **H** and **u** are the hydrostatic pressure and the water velocity at the instant **t** when a rupture in the pipe has occurred, and, consequently, a loss of water has started; **x** is the distance of the final section **T** from the section **S** where the loss **Q** occurred and **V** is the propagation velocity of the wave caused by the loss of water; $H_o$ and $u_o$ are the pressure and velocity of water in conditions of uniform motion before the water loss began. The functions **F** and **f** are null in conditions of a state in which the system of pressure transducers **TP** and processor **E** do not provide any signals.

## Claims

1. A system for detecting a sudden rupture in a pipe (2) through which flows liquid under pressure and in which pressure transducers (TP) are installed at points along the pipe (2) and an electronic processor (E) is associated with the said pressure transducers and with a signalling and alarm apparatus (AL) to process at least one algebraic function of pressure detected by the said pressure transducers (TP) and to detect an escape of liquid (Q) from a point of the pipe (2) and to activate the said signalling and alarm apparatus characterised in that the said pressure transducers (TP) are installed at points of the pipe (2) at intervals (x1, ..., xn) freely determined, in that the electronic processor is provided with software comprising a digital model of the transitory state of the pipe (2) and has the capacity to process in line the signals transmitted by every pressure transducer (TP) according to the integrated water hammering equation, to carry out in line the comparison between the forecast state of pressure (Pm) calculated by the said digital model and the value of real pressure (Pr) detected by every pressure transducer (TP) in order to activate the said signalling and alarm apparatus(AL) in the event that the said comparison indicates a loss of liquid (Q) from the pipe (2) or, in the contrary case, to carry out opportune corrections to the foreseeable rates of flow calculated by the said digital model.

2. A system according to claim 1 characterised in that it indicates every variation in the dynamic response of the pipe (2).

EP 0 559 993 A1

Fig. 1

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 280 356 (T.L. STEWART) <br> * the whole document * <br> --- | 1 | F17D5/06 <br> G01M3/28 |
| X | US-A-4 712 182 (F. WAKAMORI ET AL.) <br> * the whole document * <br> --- | 1 | |
| A | PATENT ABSTRACTS OF JAPAN <br> vol. 8, no. 133 (P-281)(1570) 20 June 1984 <br> & JP-A-59 035 126 ( SUMITOMO KINZOKU KOGYO K.K. ) 25 February 1984 <br> * abstract * <br> --- | 1 | |
| A | US-A-4 796 466 (E. FARMER) <br> * the whole document * <br> --- | 1 | |
| A | DE-A-3 810 998 (ECKARDT AG) <br> * the whole document * <br> ----- | 1 | |
| | | | TECHNICAL FIELDS SEARCHED (Int. Cl.5 ) <br><br> F17D <br> G01M |

The present search report has been drawn up for all claims

| Place of search | Date of completion of the search | Examiner |
|---|---|---|
| THE HAGUE | 03 NOVEMBER 1992 | VAN ASSCHE P.O. |

EPO FORM 1503 03.82 (P0401)